# EUROPEAN PATENT APPLICATION

(11) **EP 2 816 826 A1**
(43) Date of publication of application: **24.12.2014**
(21) Application number: 13828001.1
(22) Date of filing: 18.01.2013
(51) Int. Cl.: H04W 4/02, H04W 88/02

(54) **METHOD AND DEVICE FOR PUSHING USER MESSAGE**

(30) Priority: 10.08.2012 CN 201210285193
(71) Applicant: Huawei Technologies Co., Ltd, Shenzhen, Guangdong 518129 (CN)
(72) Inventor: LI, Dongyuan, Shenzhen Guangdong 518129 (CN)
(74) Representative: Pfenning, Meinig & Partner GbR
(86) International application number: PCT/CN2013/070738
(87) International publication number: WO 2014/023093

(57) **Abstract**

Embodiments of the present invention provide a method and a device for pushing a user message, which relate to the communications field, to improve user experience. The method includes: acquiring regular activity information of a user; triggering a first event when a current activity of a user equipment does not comply with the regular activity information; or triggering a second event when a current activity of a user equipment complies with the regular activity information. The embodiments of the present invention are applicable to pushing a user message.

## Description

This application claims priority to Chinese Patent Application No. 201210285193.0, filed with the Chinese Patent Office on August 10, 2012 and entitled "METHOD AND DEVICE FOR PUSHING USER MESSAGE", which is incorporated herein by reference in its entirety.

### TECHNICAL FIELD

The present invention relates to the communications field, and in particular, to a method and a device for pushing a user message.

### BACKGROUND

At present, a user equipment such as a smartphone used by a user has sensors such as GPS (Global Locating System) and MEMS (Micro-Electro-Mechanical Systems). The sensors help acquire well-ordered life and working styles of the user, for example, a time range and route map of going to work and going to school, and the like.

In the prior art, software on a user equipment is capable of monitoring location information of the user equipment, and determining an activity regularity of the user equipment by using the location information. However, the user equipment is incapable of making an extended application of the activity regularity, thereby lowering user experience.

### SUMMARY

Embodiments of the present invention provide a method and a device for pushing a user message, so as to improve user experience.

According to a first aspect, an embodiment of the present invention provides a method for pushing a user message, including: acquiring regular activity information of a user; and
triggering a first event when a current activity of a user equipment does not comply with the regular activity information; or triggering a second event when a current activity of a user equipment complies with the regular activity information.

In a first possible implementation manner of the first aspect, the acquiring regular activity information of a user specifically includes:
acquiring activity data of the user equipment, and acquiring, by statistics collection according to the activity data, the regular activity information, where the activity data includes time information and geographic location information of the user equipment corresponding to the time information; or
acquiring the regular activity information according to first configuration information of the user, where the first configuration information indicates that the user configures the regular activity information.

With reference to the first possible implementation manner of the first aspect, in a second possible implementation manner, the method further includes: acquiring particular activity information, and not triggering the first event when the current activity of the user equipment complies with the particular activity information.

With reference to the first aspect to the second possible implementation manner of the first aspect, in a third possible implementation manner, before the triggering a first event, the method further includes:
triggering the first event according to second configuration information, where the second configuration information indicates that the user configures whether to trigger the first event.

With reference to the third possible implementation manner of the first aspect, in a fourth possible implementation manner, after the triggering a first event, the method further includes: recording the first event.

With reference to the first aspect to the fourth possible implementation manner of the first aspect, in a fifth possible implementation manner, the first event includes: sending the user message to a device associated with the user equipment.

With reference to the first aspect or the first possible implementation manner of the first aspect, in a sixth possible implementation manner, before the triggering a second event, the method further includes: determining a location characteristic closest to the current activity of the user equipment.

With reference to the sixth possible implementation manner of the first aspect, in a seventh possible implementation manner, before the triggering a second event, the method further includes: triggering the second event according to third configuration information, where the third configuration information indicates that the user configures whether to trigger the second event.

With reference to the seventh possible implementation manner of the first aspect, in an eighth possible implementation manner, after the triggering a second event, the method further includes: recording the second event.

With reference to the first aspect, the first possible implementation manner, the sixth more possible implementation manner, the seventh possible implementation manner, or the eighth possible implementation manner of the first aspect, in a ninth possible implementation manner, the second event includes: sending user service information by using the user equipment.

With reference to the ninth possible implementation manner of the first aspect, in a tenth possible implementation manner, the sending user service information by using the user equipment includes: sending the user service information to an associated device by using the user equipment.

According to a second aspect, an embodiment of the present invention provides an data application entity, including:
an acquiring unit, configured to acquire regular activity information of a user; and
a processing unit, configured to: trigger a first event when a current activity of a user equipment does not comply with the regular activity information; or trigger a second event when a current activity of a user equipment complies with the regular activity information.

In a first possible implementation manner of the second aspect, the acquiring unit is specifically configured to acquire activity data of the user equipment, and acquire, by statistics collection according to the activity data, the regular activity information, where the activity data includes time information and geographic location information of the user equipment corresponding to the time information; or
the acquiring unit is specifically configured to acquire the regular activity information according to first configuration information of the user, where the first configuration information indicates that the user configures the regular activity information.

With reference to the first possible implementation manner of the second aspect, in a second possible implementation manner, the acquiring unit is further configured to acquire particular activity information; and the processing unit is further configured not to trigger the first event when determining that the current activity of the user equipment complies with the particular activity information.

With reference to the second aspect to the second possible implementation manner of the second aspect, in a third possible implementation manner, the processing unit is further configured to trigger the first event according to second configuration information, where the second configuration information indicates that the user configures whether to trigger the first event.

With reference to the third possible implementation manner of the second aspect, in a fourth possible implementation manner, the processing unit is further configured to: after the triggering a first event, record the first event.

With reference to the second aspect to the third possible implementation manner of the second aspect, in a fourth possible implementation manner, the data application entity further includes: a first sending unit; and the first event includes: sending, by the first sending unit, the user message to a device associated with the user equipment.

With reference to the second aspect or the first possible implementation manner of the second aspect, in a fifth possible implementation manner, the processing unit is further configured to: before the triggering a second event, determine a location characteristic closest to the current activity of the user equipment.

With reference to the fifth possible implementation manner of the second aspect, in a sixth possible implementation manner, the processing unit is further configured to: before the triggering a second event, trigger the second event according to third configuration information, where the third configuration information indicates that the user configures whether to trigger the second event.

With reference to the sixth possible implementation manner of the second aspect, in a seventh possible implementation manner, the processing unit is further configured to: after the triggering a second event, record the second event.

With reference to the second aspect, the first possible implementation manner, the fifth possible implementation manner, the sixth possible implementation manner, or the seventh possible implementation manner of the second aspect, in an eighth possible implementation manner, the data application entity further includes: a second sending unit; and the second event includes: sending, by the second sending unit, user service information by using the user equipment.

With reference to the eighth possible implementation manner of the second aspect, in a ninth possible implementation manner, the sending, by the second sending unit, user service information by using the user equipment includes: sending, by the second sending unit, the user service information to an associated device by using the user equipment.

According to a third aspect, an embodiment of the present invention provides a user equipment, including the foregoing data application entity.

By using the foregoing solutions, the data application entity collects statistics for the regular activity information of the user, triggers the first event when determining that the current activity of the user equipment does not comply with the regular activity information, or triggers the second event when the current activity of the user equipment complies with the regular activity information, and provides an intelligent service for the user.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a method for pushing a user message according to an embodiment of the present invention;
FIG. 2 is a schematic flowchart of a method for pushing a user message according to an embodiment of the present invention;
FIG. 3 is a schematic structural diagram of a data application entity according to an embodiment of the present invention;
FIG. 4 is a schematic structural diagram of another data application entity according to an embodiment of the present invention;
FIG. 5 is a schematic structural diagram of another data application entity according to an embodiment of the present invention;
FIG. 6 is a schematic structural diagram of a user equipment according to an embodiment of the present invention;
FIG. 7 is a schematic diagram of hardware of a user equipment according to an embodiment of the present invention;
FIG. 8 is a reference diagram of a user interface according to an embodiment of the present invention;
FIG. 9 is a reference diagram of another user interface according to an embodiment of the present invention;
FIG. 10 is a reference diagram of another user interface according to an embodiment of the present invention; and
FIG. 11 is a reference diagram of another user interface according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

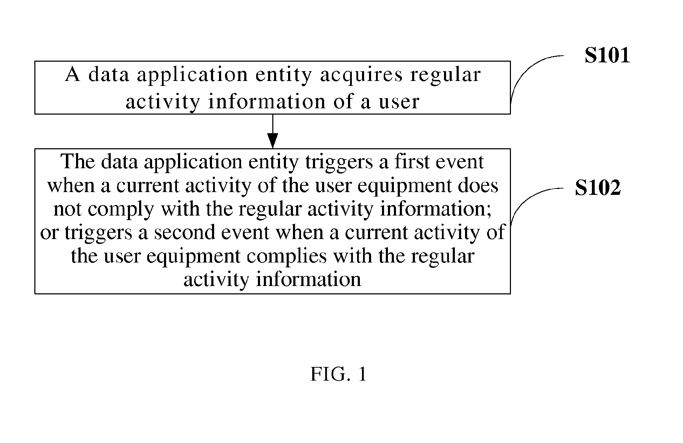

An embodiment of the present invention provides a method for pushing a user message. As shown in FIG. 1, the execution body in this embodiment of the present invention is a data application entity, and the method includes the following steps:
S101. The data application entity acquires regular activity information of a user.

The data application entity acquires the regular activity information of the user mainly in two manners. One manner: The data application entity acquires activity data of the user, and acquires, by statistics collection according to the activity data, the regular activity information; where the activity data includes time information and geographic location information of a user equipment corresponding to the time information. The geographic location information of the user equipment may be a regular region of the user's activity. The region is acquired by the data application entity by collecting statistics for the user's activity regularity within a predetermined time range. The activity regularity information may be a regular region of an activity of the user equipment corresponding to a time range. Specifically, the data application entity analyzes a location (the data application entity may consider the location as home and school, or working place by default) where the user equipment stays for a long period of time (for example, exceeding 6 hours), and a location where the activity of the user equipment constantly changes; hence acquires a frequently traveled path from one location to another location within a predetermined time range (for example, one week), and forms an average regular activity path of the user activity according to the acquired path. The average regular activity path is a path acquired by the data application entity by means of statistics collection according to the path that is frequently traveled by the user equipment. Finally, the regular region is formed according to the path that is frequently traveled by the user equipment and the average regular activity path within the foregoing predetermined time range. For example, the data application entity acquires, by statistics collection within one week, that the user's activity regularity is as follows: the user travels from one location through the A path region (that is, the foregoing regular region) to another location within a time range from 8 to 8:30 in the morning; and after 8:30, the geographic location where the user stays for a long period of time is the another location, and the data application entity considers by default that the one location is home, and the another location is school or working place. Herein only exemplary description is given, which is not intended for limitation.

The other manner: The regular activity information is acquired according to first configuration information of the user, where the first configuration information indicates that the user configures the regular activity information. For example, the regular activity information is that: One location is home, and another location is school or working place, and the user travels from home through the A path region (that is, the foregoing regular region) to school within the time range from 8 to 8:30 in the morning; and after 8:30, the geographic location of the user is school. Likewise, herein only exemplary description is given, which is not intended for limitation.

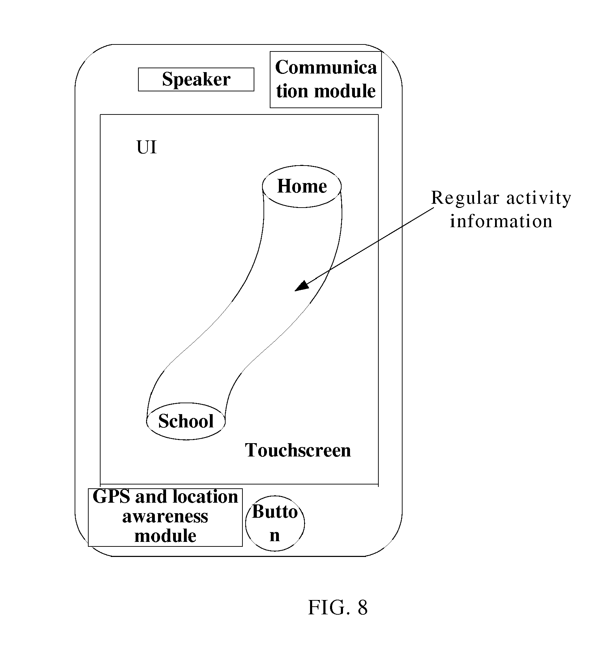

FIG. 8 specifically shows a display manner of the foregoing regular activity information in a mobile phone interface, where the regular activity information herein is a regular region of the user's activity.

It should be noted that the foregoing activity data may also be geographic location information of the user equipment, which is an optional implementation manner and shall also fall within the protection scope of the present invention.

S102. The data application entity triggers a first event when a current activity of a user equipment does not comply with the regular activity information; or triggers a second event when a current activity of the user equipment complies with the regular activity information.

With respect to a process in which the data application entity triggers the first event when determining that the current activity of the user equipment does not comply with the regular activity information, specific description is given as follows:

The foregoing first event may include: sending, by the data application entity, a user message to a device associated with the user equipment. As an optional specific operation, for example, the user may send the user message by using a short message service message or an email, which is not limited by the present invention.

Optionally, the foregoing device associated with the user equipment may be configured by using the data application entity. For example, a mobile phone user may configure a contact recorded in an address book as a related supervisor, so that the user message is sent to the related supervisor, which is not limited by the present invention.

If the user does not perform the configuration, the data application entity sends the user message to a default related supervisor. For example, when there are few records in the address book, by default the supervisors are all the contacts recorded in the address book; when there are a large number of records in the address book (for example, more than 100 records), it is not a preferred policy to send the user message to all the contacts, and by default the supervisors are a list of contacts recorded in the address book that are recently contacted. In this way, practically the mobile phone user sends the user message to all the contacts recorded in the address book by using the data application entity, or sends the user message to the recently contacted contacts recorded in the address book (for example, the contacts that are contacted by the mobile phone user within the recent one week).

In addition, the user may also configure, by using the data application entity, a certain interval at which the user message is repeatedly sent to the related supervisor (for example, user service information is sent to the related supervisor at an interval of 5 minutes), so as to prevent a problem that the user message is lost or ignored due to an incorrect operation of the related supervisor. The specific time interval is configured by the user.

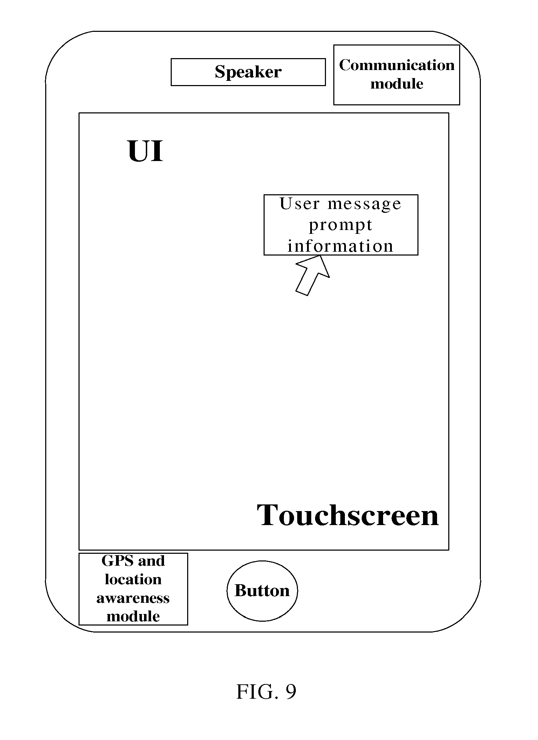

When receiving the user message, the related supervisor may view the user message by directly clicking message prompt information on the screen of the user equipment, or view the user message in a message list (for example, an inbox of the short message service message or email). FIG. 9 shows a manner of displaying a user message to the related supervisor by using a mobile phone. The related supervisor may view the user message only by clicking the user message prompt information shown in FIG. 9.

Further, when receiving the user message, the related supervisor may also send a locking command to the user equipment that sends the user message, so as to lock the user equipment, and/or send a constantly sending command to the user equipment so that the user equipment constantly sends the user message, thereby achieving a purpose of constant monitoring. In this way, when the user equipment unexpectedly loses a user message, the user can conveniently monitor the user equipment.

In addition, before triggering the first event, the data application entity triggers the first event according to second configuration information, where the second configuration information indicates that the user configures whether to trigger the first event.

Optionally, after the first event is triggered, the first event is recorded.

If the current activity of the user equipment does not comply with the regular activity information, but the current activity of the user is a particular user activity, the user does not need to let the related supervisor know his or her activity information. The data application entity may also determine not to trigger the first event according to the second configuration information.

Further, the data application entity may also acquire particular activity information, and does not trigger the first event when the current activity of the user equipment complies with the particular activity information.

The particular activity information may be configured by the user.

For example, the user may configure a region as a tourism region; when a geographic location of the user equipment is within the tourism region, although in this case the current activity of the user equipment does not comply with the foregoing regular activity information, the data application entity does not trigger the first event because the tourism region is a particular region configured by the user.

Certainly, the user may further configure, by using the data application entity, a time range when the user equipment stays in the tourism region. If the data application entity detects that a duration when the user stays in the tourism region exceeds the configured time range, the data application entity triggers the first event. Herein only exemplary description is given, which is not limited by the present invention.

The foregoing user message may be a prompt message that notifies the related supervisor of the geographic location of the user equipment, or may be an alarm message that notifies the related supervisor of security information of the user equipment, which is not limited by the present invention.

With respect to a process in which the second event is triggered when the current activity of the user equipment complies with the regular activity information, specific description is given as follows:

The foregoing second event may be: sending, by the data application entity, the user service information by using the user equipment, which may specifically be presenting the user service information to the user by using the user equipment, or sending the user service information to an associated device by using the user equipment.

Before triggering the second event, the data application entity may further determine a location characteristic closest to the current activity of the user equipment, where the location characteristic may be home, school, working place, or the like, which is not limited by the present invention.

Further, the user may configure that the data application entity presents the user service information only by using the user equipment.

The user may also configure that the data application entity sends the user service information to the associated device by using the user equipment. As an optional specific operation, for example, the data application entity may send the user message by using a short message service message or an email, which is not limited by the present invention

The associated device includes the data application entity, and may be configured by the user. The associated device may also be a user equipment that is in the same activity region as the user equipment by default.

For example, if the data application entity determines that the user equipment is currently at home, and determines that it is at night according to time, weather information on the next day is acquired by using the Network, and is presented to the user by using the user equipment. This facilitates the user's travel on the next day. Optionally, the data application entity may also send the weather information to an associated device by using the user equipment. For example, if the user configures a specific associated device (for example, a tablet computer or another mobile phone, or the like), the weather information is sent to the associated device configured by the user; if the user does not configure a specific associated device, the weather information may be sent to all associated devices at home.

The user acquires the weather information by clicking prompt information on the screen of the user equipment; or the weather information is directly displayed on the screen of the user equipment in a text information form, thereby facilitating the user's reading. Certainly, the weather information herein is only described as an example, and service information such as an alarm clock reminder, a dining reminder, or a rest reminder, may also be applicable, which is not limited by the present invention.

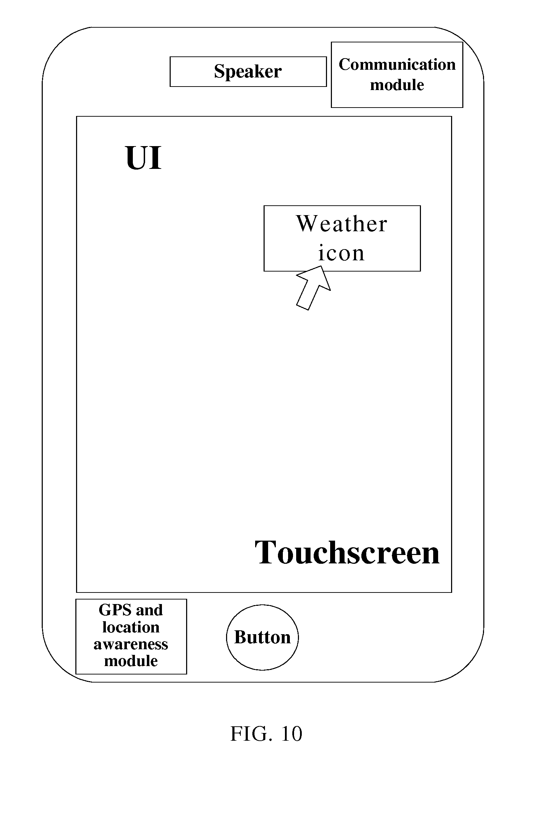

Specifically, FIG. 10 shows a manner of displaying user service information to a user by using a mobile phone. For example, the user may view weather information by clicking the weather icon in an interface.

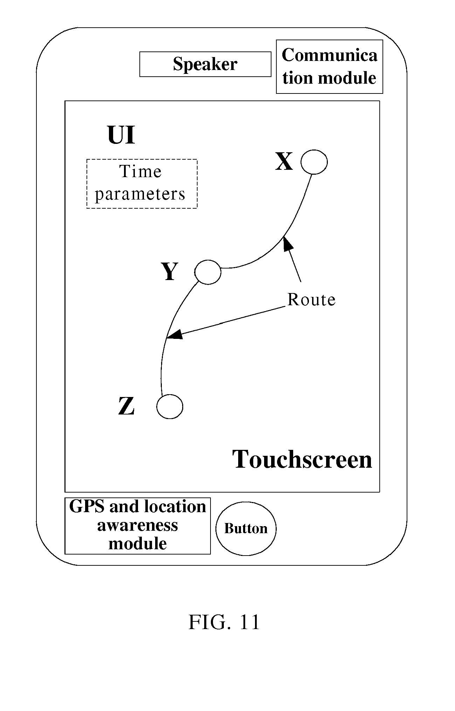

For another example, the user may also configure a three-day trip by using the data application entity, and the trip is displayed on the mobile phone as shown in the interface in FIG. 11. The three days are spent at three locations X, Y, and Z, time parameters record a time and a location (for example, year xxxx, month xx, and date xx, and the start location X) from which the user departs, and an expected time and location (for example, year xxxx, month xx, and date xx, and the destination location Z) at which the user arrives. The data application entity acquires, by using the Network, weather information on the next three days at locations X, Y, and Z one day before the user carries the user equipment to depart, and presents the weather information to the user by using the user equipment. Herein only exemplary description is given, which is not limited by the present invention.

In addition, the data application entity acquires related deviation information (for example, an extent of deviation from the average path) by detecting the current activity path and the foregoing average regular activity path of the user equipment, and sends the acquired deviation information to a device associated with the user equipment, so that the device associated with the user equipment presents the related deviation information to the related supervisor. In this way, the related supervisor is capable of better monitoring the user equipment.

Further, before triggering the second information, the data application entity triggers the second event according to third configuration information, where the third configuration information indicates that the user configures whether to trigger the second event.

Optionally, after the second information is triggered, the second event is recorded.

It should be noted that the foregoing user service information may be the service information such as the weather information, the alarm clock reminder, the dining reminder, or the rest reminder, which is not limited by the present invention.

The execution body of the foregoing solution is the data application entity. The data application entity collects statistics for the regular activity information of the user, and triggers the first event when determining that the current activity of the user equipment does not comply with the regular activity information, providing monitoring on unexpected information when the user equipment deviates from the regularity; or triggers the second event when the current activity of the user equipment complies with the regular activity information, providing an intelligent service for the user.

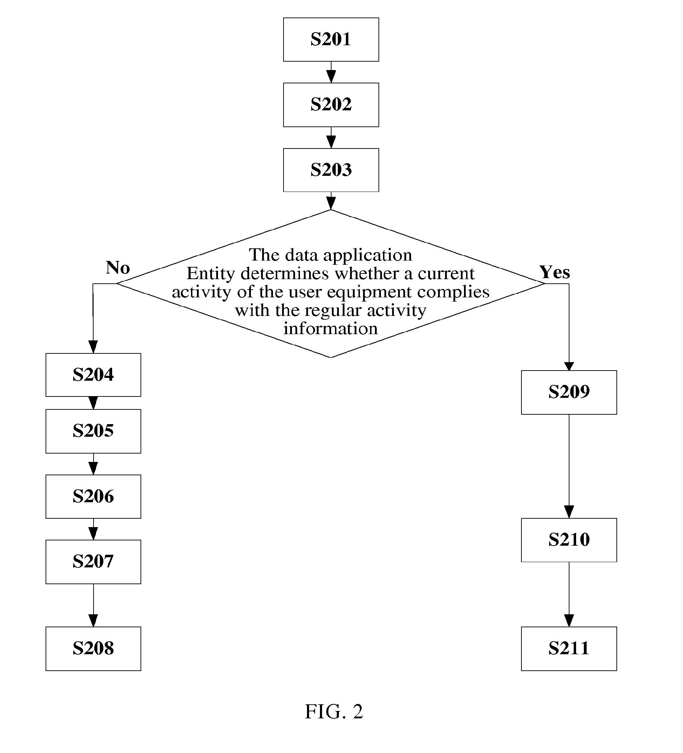

An embodiment of the present invention provides a method for pushing a user message, as shown in FIG. 2, including the following steps:
S201. A user runs a data application entity by using a user equipment.

The data application entity permanently resides and runs on the user equipment.

S202. The data application entity acquires regular activity information of the user.

The data application entity acquires the regular activity information of the user mainly in two manners. One manner: The data application entity acquires activity data of the user, and acquires, by statistics collection according to the activity data, the regular activity information; where the activity data includes time information and geographic location information of the user equipment corresponding to the time information. The geographic location information of the user equipment may be a regular region of the user activity. The region is acquired by the data application entity by collecting statistics for the user's activity regularity within a predetermined time range. The activity regularity information may be a regular region of an activity of the user equipment corresponding to a time range. Specifically, the data application entity analyzes a location (the data application entity may consider the location as home and school, or working place by default) where the user equipment stays for a long period of time (for example, exceeding 6 hours), and a location where the activity of the user equipment constantly changes; hence acquires a frequently traveled path from one location to another location within a predetermined time range (for example, one week), and forms an average regular activity path of the user activity according to the acquired path. The average regular activity path is a path acquired by the data application entity by means of statistics collection according to the path that is frequently traveled by the user equipment. Finally, the regular region is formed according to the path that is frequently traveled by the user equipment and the average regular activity path within the foregoing predetermined time range. For example, the data application entity acquires, by statistics collection within one week, that the user's activity regularity is as follows: the user travels from one location through the A path region (that is, the foregoing regular region) to another location within a time range from 8 to 8:30 in the morning; and after 8:30, the geographic location where the user stays for a long period of time is the another location, and the data application entity considers by default that the one location is home, and the another location is school or working place. Herein only exemplary description is given, which is not intended for limitation.

The other manner: The regular activity information is acquired according to first configuration information of the user, where the first configuration information indicates that the user configures the regular activity information. For example, the regular activity information is that: One location is home, and another location is school or working place, and the user travels from home through the A path region (that is, the foregoing regular region) to school within the time range from 8 to 8:30; and after 8:30 in the morning, the geographic location of the user is school. Likewise, herein only exemplary description is given, which is not intended for limitation.

It should be noted that the foregoing activity data may also be geographic location information of the user equipment, which is an optional implementation manner and shall also fall within the protection scope of the present invention.

S203. The user configures, by using the data application entity, a device (that is, a related supervisor) associated with the user equipment.

For example, a mobile phone user may configure a contact recorded in an address book as the related supervisor, so that a user message is sent to the related supervisor, which is not limited by the present invention.

If the user does not perform the configuration, the data application entity sends the user message to a default related supervisor. For example, when there are few records in the address book, by default the supervisors are all the contacts recorded in the address book; when there are a large number of records in the address book (for example, more than 100 records), it is not a preferred policy to send the user message to all the contacts, and by default the supervisors are a list of contacts recorded in the address book that are recently contacted. In this way, practically the mobile phone user sends the user message to all the contacts recorded in the address book by using the data application entity, or sends the user message to the recently contacted contacts recorded in the address book (for example, the contacts that are contacted by the mobile phone user within the recent one week).

Further, when the data application entity determines that a current activity of the user equipment does not comply with the regular activity information, steps S204 to S208 are performed.

When the data application entity determines that the current activity of the user equipment complies with the regular activity information, steps S209 to S211 are performed.

S204. The data application entity determines to trigger a first event (that is, sending the user message to the related supervisor) according to second configuration information.

The second configuration information indicates that the user configures whether to trigger the first event. The user message may be a prompt message that notifies the related supervisor of the geographic location of the user equipment, or may be an alarm message that notifies the related supervisor of security information of the user equipment, which is not limited by the present invention.

Optionally, the user may also configure, by using the data application entity, a certain interval at which the user message is repeatedly sent to the related supervisor (for example, user service information is sent to the related supervisor at an interval of 5 minutes), so as to prevent a problem that the user message is lost or ignored due to an incorrect operation of the related supervisor. The specific time interval is configured by the user.

In addition, when the data application entity determines, according to the second configuration information, not to trigger the related first event, step S208 is performed.

S205. After receiving the user message, the related supervisor may view the user message by clicking message prompt information on the screen of the user equipment.

Alternatively, the related supervisor may view the user message in a message list (for example, an inbox of the short message service message or email).

S206. The data application entity receives a locking command and/or constantly sending command sent by the related supervisor.

S207. After receiving the locking command, the data application entity locks the user equipment; and/or after receiving the constantly sending command, the data application entity constantly sends the user message.

S208. Record the first event.

It should be noted that, the data application entity constantly receives current activity data of the user, and therefore, according to user experience, steps S204 to S208 may not be constantly and repeatedly performed within a short period of time, but may be repeatedly performed at a specific time interval. If the time interval is not configured, the default value is, for example, 5 minutes or 10 minutes.

S209: The data application entity determines a location characteristic closest to the current activity of the user equipment

The location characteristic may be home, school, working place, or the like, which is not limited by the present invention.

S210. The data application entity triggers a second event according to third configuration information (that is, sending the user service information by using the user equipment).

Further, the user may configure that the data application entity presents the user service information only by using the user equipment.

The user may also configure that the data application entity sends the user service information to an associated device by using the user equipment. As an optional specific operation, for example, the data application entity may send the user message by using a short message service message or an email, which is not limited by the present invention

The associated device includes the data application entity, and may be configured by the user. The associated device may be a user equipment that is in the same activity region as the user equipment by default.

For example, if the data application entity determines that the user equipment is currently at home, and determines that it is at night according to time, weather information on the next day is acquired by using the Network, and is presented to the user by using the user equipment. This facilitates the user's travel on the next day. Optionally, the data application entity may also send the weather information to an associated device by using the user equipment. For example, if the user configures a specific associated device (for example, a tablet computer or another mobile phone, or the like), the weather information is sent to the associated device configured by the user; if the user does not configure a specific associated device, the weather information may be sent to other associated devices at home.

The user acquires the weather information by clicking prompt information on the screen of the user equipment; or the weather information is directly displayed on the screen of the user equipment in a text information form, thereby facilitating the user's reading. Certainly, the weather information herein is only described as an example, and service information such as an alarm clock reminder, a dining reminder, or a rest reminder, may also be applicable, which is not limited by the present invention.

In addition, when the second event is not triggered according to the third configuration information, step S211 is performed.

S211. Record the second event.

By adopting the foregoing solution, the data application entity collects statistics for the regular activity information of the user, and hence triggers the first event when determining that the current activity of the user equipment does not comply with the regular activity information, and pushes the user service information to the user when determining that the current activity of the user equipment complies with the regular activity information, facilitating the user's life.

It should be noted that, with respect to the foregoing method embodiments, for ease of description, a series of action combinations are given for description. However, a person skilled in the art should know that the present invention is not limited by the described action sequence. In addition, a person skilled in the art should know that the embodiments described in the specification are exemplary embodiments, the involved actions and modules are not definitely needed in the present invention.

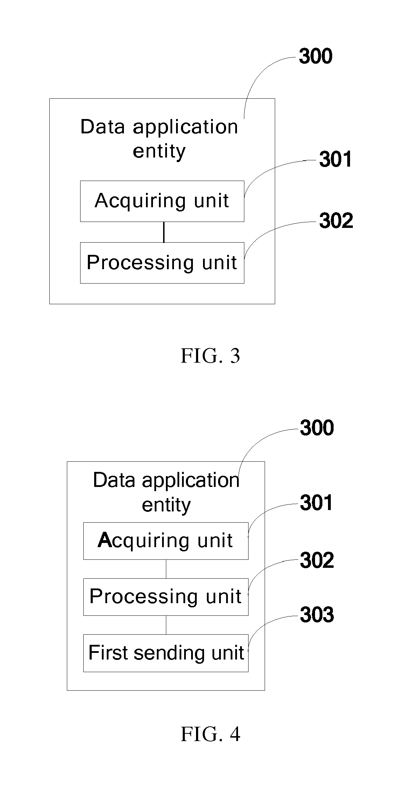

An embodiment of the present invention provides a data application entity 300, as shown in FIG. 3, including an acquiring unit 301 and a processing unit 302:
an acquiring unit 301, configured to acquire regular activity information of a user; and

Optionally, the acquiring unit is specifically configured to: acquire activity data of a user equipment, and acquire, by statistics collection according to the activity data, the regular activity information, where the activity data includes time information and geographic location information of the user equipment corresponding to the time information; or acquire the regular activity information according to first configuration information of the user, where the first configuration information indicates that the user configures the regular activity information.
a processing unit 302, configured to: trigger a first event when a current activity of the user equipment does not comply with the regular activity information; or trigger a second event when a current activity of the user equipment complies with the regular activity information.

If the processing unit 302 is configured to trigger the first event when the current activity of the user equipment does not comply with the regular activity information:

As shown in FIG. 4, the data application entity 300 further includes: a first sending unit 303; and the first event may include: sending, by the first sending unit 303, a user message to a device associated with the user equipment. As an optional specific operation, for example, the user may send the user message by using a short message service message or an email, which is not limited by the present invention.

Optionally, the foregoing device associated with the user equipment may be configured by using the processing unit of the data application entity. For example, a mobile phone user may configure a contact recorded in an address book as a related supervisor, so that the user message is sent to the related supervisor, which is not limited by the present invention.

If the user does not perform the configuration, the first sending unit sends the user message to a default related supervisor. For example, when there are few records in the address book, by default the supervisors are all the contacts recorded in the address book; when there are a large number of records in the address book (for example, more than 100 records), it is not a preferred policy to send the user message to all the contacts, and by default the supervisors are a list of contacts recorded in the address book that are recently contacted. In this way, practically the mobile phone user sends the user message to all the contacts recorded in the address book by using the data application entity, or sends the user message to the recently contacted contacts recorded in the address book (for example, the contacts that are contacted by the mobile phone user within the recent one week).

In addition, the user may also configure, by using the processing unit of the data application entity, a certain interval at which the user message is repeatedly sent to the related supervisor (for example, user service information is sent to the related supervisor at an interval of 5 minutes), so as to prevent a problem that the user message is lost or ignored due to an incorrect operation of the related supervisor. The specific time interval is configured by the user.

Optionally, the acquiring unit 301 is further configured to acquire particular activity information; and the processing unit 302 is further configured not to trigger the first event when determining that the current activity of the user equipment complies with the particular activity information.

The particular activity information may be configured by the user.

For example, the user may configure a region as a tourism region; when a geographic location of the user equipment is within the tourism region, although in this case the current activity of the user equipment does not comply with the foregoing regular activity information, the processing unit does not trigger the first event because the tourism region is a particular region configured by the user.

Certainly, the user may further configure a time range when the user equipment stays in the tourism region. If the processing unit detects that a duration when the user stays in the tourism region exceeds the configured time range, the processing unit triggers the first event. Herein only exemplary description is given, which is not limited by the present invention.

Optionally, the processing unit 302 is further configured to: before the triggering the first event, determine to trigger the first event according to second configuration information; and after the triggering the first event, record the first event.

The second configuration information indicates that the user configures whether to trigger the first event.

The foregoing user message may be a prompt message that notifies the related supervisor of the geographic location of the user equipment, or may be an alarm message that notifies the related supervisor of security information of the user equipment, which is not limited by the present invention.

If the processing unit 302 is configured to trigger the second event when the current activity of the user equipment complies with the regular activity information:

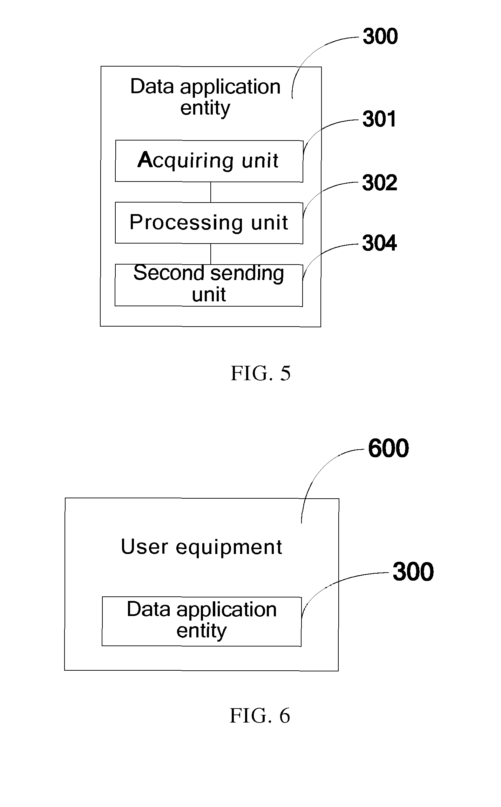

As shown in FIG. 5, the data application entity further includes: a second sending unit 304; and the second event may include: sending, by the second sending unit 304, the user service information by using the user equipment, which may specifically be presenting the user service information to the user by using the user equipment, or sending the user service information to an associated device by using the user equipment.

Optionally, the processing unit 302 is further configured to: before triggering the second event, determine a location characteristic closest to the current activity of the user equipment.

The location characteristic may be home, school, working place, or the like, which is not limited by the present invention.

Further, the user may configure that the processing unit presents the user service information only by using the user equipment.

The user may also configure that the second sending unit sends the user service information to an associated device by using the user equipment. As an optional specific operation, for example, the second sending unit may send the user message by using a short message service message or an email, which is not limited by the present invention

The associated device includes the data application entity, and may be configured by the user. The associated device may be a user equipment that is in the same activity region as the user equipment by default.

For example, if the processing unit determines that the user equipment is currently at home, and determines that it is at night according to time, weather information on the next day is acquired by using the Network, and is presented to the user by using the user equipment. This facilitates the user's travel on the next day. Optionally, the second sending unit may also send the weather information to an associated device by using the user equipment. For example, if the user configures a specific associated device (for example, a tablet computer or another mobile phone, or the like), the weather information is sent to the associated device configured by the user; if the user does not configure a specific associated device, the weather information may be sent to other associated devices at home.

The user acquires the weather information by clicking prompt information on the screen of the user equipment; or the weather information is directly displayed on the screen of the user equipment in a text information form, thereby facilitating the user's reading. Certainly, the weather information herein is only described as an example, and service information such as an alarm clock reminder, a dining reminder, or a rest reminder, may also be applicable, which is not limited by the present invention.

For another example, the user may configure a three-day trip. The three days are spent at three locations X, Y, and Z, time parameters record a time and a location (for example, year xxxx, month xx, and date xx, and the start location X) from which the user departs, and an expected time and location (for example, year xxxx, month xx, and date xx, and the destination location Z) at which the user arrives. The processing unit acquires, by using the Network, weather information on the next three days at locations X, Y, and Z one day before the user carries the user equipment to depart, and presents the weather information to the user by using the user equipment. Herein only exemplary description is given, which is not limited by the present invention.

In addition, the processing unit acquires related deviation information (for example, an extent of deviation from the average path) by detecting the current activity path and the foregoing average regular activity path of the user equipment, and the second sending unit sends the acquired deviation information to a device associated with the user equipment, so that the device associated with the user equipment presents the related deviation information to the related supervisor. In this way, the related supervisor is capable of better monitoring the user equipment.

Further, before triggering the second information, the processing unit 302 triggers the second event according to third configuration information, where the third configuration information indicates that the user configures whether to trigger the second event.

By adopting the foregoing data application entity, the data application entity collects statistics for the regular activity information of the user, and hence triggers the first event when determining that the current activity of the user equipment does not comply with the regular activity information, and pushes the user service information to the user when determining that the current activity of the user equipment complies with the regular activity information, facilitating the user's life.

It should be noted that a person skilled in the art may clearly understand that, for ease and brevity of description, for a specific working process of the foregoing data application entity, reference may be made to the corresponding process in the foregoing method embodiments, and details are not repeatedly described herein.

In addition, the foregoing data application entity may be either implemented by means of hardware or implemented by means of a combination of hardware and software.

An embodiment of the present invention provides a user equipment 600, as shown in FIG. 6, including the data application entity 300 described in the foregoing embodiment.

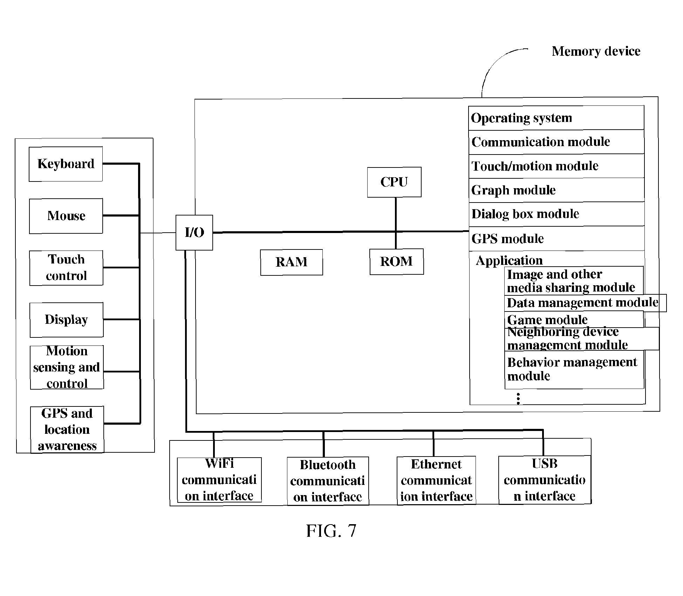

Exemplarily, FIG. 7 provides a specific implementation manner of the user equipment 600.

The foregoing user equipment may be a mobile phone or a tablet computer, which is not limited by the present invention.

According to the method and the device for pushing a user message provided by the embodiments of the present invention, the data application entity collects statistics for the regular activity information of the user, and hence triggers the first event when determining that the current activity of the user equipment does not comply with the regular activity information, and pushes the user service information to the user when determining that the current activity of the user equipment complies with the regular activity information, facilitating the user's life.

In the embodiments provided in this application, it should be understood that the disclosed device and method may be implemented in other manners, and the foregoing device embodiments are merely exemplary. For example, division of the units is merely division based on logical functions thereof, and may be other divisions in practical implementation. For example, multiple units or components may be combined or integrated into another device, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for pushing a user message, comprising:
acquiring regular activity information of a user; and
triggering a first event if a current activity of a user equipment does not comply with the regular activity information; or triggering a second event if a current activity of a user equipment complies with the regular activity information.

2. The method according to claim 1, wherein the acquiring regular activity information of a user comprises:
acquiring activity data of the user equipment, and acquiring, by statistics collection according to the activity data, the regular activity information, wherein the activity data comprises time information and geographic location information of the user equipment corresponding to the time information; or
acquiring the regular activity information according to first configuration information of the user, wherein the first configuration information indicates that the user configures the regular activity information.

3. The method according to claim 2, further comprising: acquiring particular activity information, and not triggering the first event when a current activity of the user equipment complies with the particular activity information.

4. The method according to any one of claims 1 to 3, wherein before the triggering a first event, further comprising:
triggering the first event according to second configuration information, wherein the second configuration information indicates that the user configures whether to trigger the first event.

5. The method according to claim 4, wherein after the triggering a first event, further comprising:
recording the first event.

6. The method according to any one of claims 1 to 5, wherein the first event comprises: sending the user message to a device associated with the user equipment.

7. The method according to claim 1 or 2, wherein before the triggering a second event, further comprising: determining a location characteristic closest to the current activity of the user equipment.

8. The method according to claim 7, wherein before the triggering a second event, further comprising: triggering the second event according to third configuration information, wherein the third configuration information indicates that the user configures whether to trigger the second event.

9. The method according to claim 8, wherein after the triggering a second event, further comprising: recording the second event.

10. The method according to claim 1, 2, 7, 8, or 9, wherein the second event comprises: sending user service information by using the user equipment.

11. The method according to claim 10, wherein the sending user service information by using the user equipment comprises: sending the user service information to an associated device by using the user equipment.

12. A data application entity, comprising:
an acquiring unit, configured to acquire regular activity information of a user; and
a processing unit, configured to: trigger a first event when a current activity of a user equipment does not comply with the regular activity information; or trigger a second event when a current activity of a user equipment complies with the regular activity information.

13. The data application entity according to claim 12, wherein the acquiring unit is specifically configured to acquire activity data of the user equipment, and acquire, by statistics collection according to the activity data, the regular activity information, wherein the activity data comprises time information and geographic location information of the user equipment corresponding to the time information; or
the acquiring unit is specifically configured to acquire the regular activity information according to first configuration information of the user, wherein the first configuration information indicates that the user configures the regular activity information.

14. The data application entity according to claim 13, wherein the acquiring unit is further configured to acquire particular activity information; and the processing unit is further configured not to trigger the first event when determining that the current activity of the user equipment complies with the particular activity information.

15. The data application entity according to claims 12 to 14, wherein the processing unit is further configured to trigger the first event according to second configuration information, wherein the second configuration information indicates that the user configures whether to trigger the first event.

16. The data application entity according to claims 12 to 15, wherein the processing unit is further configured to: after the triggering a first event, record the first event.

17. The data application entity according to claims 12 to 16, wherein the data application entity further comprises: a first sending unit; and the first event comprises: sending, by the first sending unit, a user message to a device associated with the user equipment.

18. The data application entity according to claim 12 or 13, wherein the processing unit is further configured to: before the triggering a second event, determine a location characteristic closest to the current activity of the user equipment.

19. The data application entity according to claim 18, wherein the processing unit is further configured to: before the triggering a second event, trigger the second event according to third configuration information, wherein the third configuration information indicates that the user configures whether to trigger the second event.

20. The data application entity according to claim 19, wherein the processing unit is further configured to: after the triggering a second event, record the second event.

21. The data application entity according to claim 12, 13, 18, 19, or 20, wherein the data application entity further comprises: a second sending unit; and the second event comprises: sending, by the second sending unit, user service information by using the user equipment.

22. The data application entity according to claim 21, wherein the sending, by the second sending unit, user service information by using the user equipment comprises: sending, by the second sending unit, the user service information to an associated device by using the user equipment.

23. A user equipment, comprising a data application entity according to any one of claims 12 to 22.
